# EUROPEAN PATENT SPECIFICATION

(11) **EP 2 609 726 B1**
(45) Date of publication and mention of the grant of the patent: **03.09.2014**
(21) Application number: 12706121.6
(22) Date of filing: 17.01.2012
(51) Int. Cl.: H04M 3/42, H04M 3/487, H04M 3/38, H04M 15/00, H04W 4/24

(54) **METHOD FOR NOTIFICATION OF A CALLED SUBSCRIBER IN THE ABSENCE OF SUFFICIENT CREDIT OF THE CALLING PARTY**
VERFAHREN ZUR BENACHRICHTIGUNG EINES ANGERUFENEN TEILNEHMERS IM FALLE FEHLENDEN KREDITS DER ANRUFENDEN PARTEI
PROCÉDÉ DE NOTIFICATION D'ABONNÉ APPELÉ EN L'ABSENCE DE CRÉDIT SUFFISANT DE LA PARTIE APPELANTE

(30) Priority: 17.03.2011 MD S20110195
(43) Date of publication of application: 03.07.2013
(73) Proprietor: Nicolaescu, Gheorghe, Straseni 3721 (MD)
(72) Inventor: Nicolaescu, Gheorghe, Straseni 3721 (MD)
(74) Representative: Beck & Rössig European Patent Attorneys
(86) International application number: PCT/MD2012/000001
(87) International publication number: WO 2012/125012

(56) References cited:
- WO-A1-2004/100521
- WO-A1-2004/107795
- WO-A1-2008/013437
- WO-A2-2009/136407
- US-A1- 2003 231 753

## Description

The invention relates to telephone communication, in particular to methods for notification of the called subscriber in the communication networks, namely in the absence of the calling party's valid credit account, and can be used in existing mobile telecommunications systems, including GSM, 3GSM, 3G, CDMA, WCDMA, and others.

The widespread use of mobile communication is an undeniable evidence of its convenience to users and causes the ever-increasing need to expand services provided by mobile operators.

For example, of great importance in the implementation of mobile communications is the ability to transfer a call from the calling party to the called party.

As a rule, the need for such a service arises in standard situations, when the called party's phone is turned off, is out of service or busy, for example, the subscriber answers another call.

However, in practice quite often the impossibility to establish a contact with the called subscriber is connected with the absence of a valid credit account of the calling subscriber, which can lead to the loss of an important call.

At present, some methods are developed that prevent the loss of such calls by transferring them from the called subscriber, thanks to his notification of the held call, to the calling subscriber. In such cases the burden of payment falls on the called party, which in this case acts as a calling party.

It is known a method for announcement of a call from an insolvent calling subscriber to transfer a call by dialing a certain pre-determined set of digits and signs (cf. http://www.moldcell.md/private/products_services/text/callme). According to provided information the dialed number is in the form of: * 111 * called subscriber's phone number #ok. In this case the called subscriber receives an SMS with a request to call and the phone number for communication.

This method is inconvenient because the calling subscriber must dial a new, often unfamiliar sequence of digits and signs that not everyone knows, and in critical situations of emergency call even knowing users cannot simply remember it.

In addition, this embodiment of call is valid only in the network of one offering it operator, which considerably limits the possibility of using the described method.

The closest by the technical essence to the claimed method is a method for managing the telephone communication, as set out in the Russian patent Nº 2361369.

According to the known method for the implementation of calls in the mobile communication network each network subscriber is provided an opportunity to get network access for outgoing calls, regardless of the status of his/her account and accept the call and/or receive calling subscriber's messages without the prepaid credit account, at the same time the calling subscriber dials the phone number of the called subscriber, the operator of the calling subscriber determines his solvency, for the called subscriber is created a notification about the missed call with the representation of information about the calling subscriber.

In determining by the operator of the fact that the calling subscriber is a user who does not have a valid credit account, it is send a call over the network to the operator serving the called subscriber. It is passed the call to the called subscriber. The unpaid outgoing calls past over the network are disconnect, after the predetermined number of rings, at the entrance of the called subscriber's mobile phone. As stated in the patent, the used network is set up so that calls outgoing from a calling subscriber's telephone are disconnected after one ring.

The system that implements this method represents a network configured with the possibility of getting network access for outgoing calls, regardless of the state of the subscriber's account and receipt by the subscribers' phones of calls and/or messages from calling subscribers. The call outgoing from a mobile phone passes through the operator of the calling subscriber, schematically shown by a base station, mobile communications switching center and relocation register, and goes directly to the operator of the called subscriber having a similar circuitry and associated with the mobile phone of his subscriber.

In accordance with the patented method and system over the network to the mobile phone of the called subscriber pass all calls: paid and unpaid, the latter are automatically disconnected at the input of the calling subscriber's phone, passing one ring. According to the invention, that is sufficient for a notification to appear in the phone about the missed call.

However, in the description of the invention there is no information on the action and, accordingly, the apparatus module in the proposed configuration of the network with which the network is disconnected at the input of the called subscriber's mobile phone.

In reality, the hardware solution of the mobile communication network, providing for the disconnection of calls at the input of the called subscriber's phone, is currently insufficiently worked on. On the other hand, there may be a situation of technical failures in the network, as a result of which a connection is established in the passing call and the called subscriber answers. In this case, the burden of payment will be on the calling subscriber and he will receive a bond from his operator.

Thus, the expected result will not be achieved.

All this will considerably reduce the reliability of the method for managing the telephone communication described in the patent Nº 2361369.

The problem, to be solved by the proposed invention, is to create a reliable and user-friendly method for performing information telephone calls, realizing the possibility for the calling subscriber, in the absence of a valid credit account to pay for a call, to inform the called subscriber of the calling attempt in real time in various mobile telecommunication systems.

The problem is solved by the fact that the in the method for performing information telephone calls, performed in a mobile communication network, in which each subscriber of the network is provided with an opportunity to get network access for outgoing calls, regardless of the status of his/her account, and to accept the call and/or receive the calling subscriber's messages without the pre-paid credit account, the calling subscriber dials the phone number of the called subscriber, the operator of the calling subscriber determines his solvency, a notification about the missed call is created for the called subscriber, providing information about the calling subscriber, upon initiation of a call by the calling subscriber, who does not have a valid credit account, for its transmission to the called subscriber the outgoing call is directed through the operator serving the calling subscriber to a forwarding and controlling server and at its command disconnects the calling subscriber, the forwarding and controlling server processes the obtained information and forms a call, by this call through the operator serving the calling subscriber is transferred an outgoing call to the operator's network serving the called subscriber as an information call comprising the complete phone number of the calling subscriber and notifying of the missed call, the information call is disconnected instantly by command of the forwarding and controlling server when the operator serving the called subscriber confirms receipt of information about calling subscriber.

At the same time, upon disconnection the operator servicing the calling subscriber sends him a notification of the absence of the valid credit account.

The result, obtained by means of the claimed method, consists in increasing the reliability and ease of communication between subscribers in an irregular situation, namely upon insolvency of the calling subscriber.

This result is ensured by the fact that the proposed method, unlike the prototype, is based on a different ideological approach to the implementation of the communication. According to the known method over the network to the phone of the called subscriber pass both the paid and unpaid call, whereas in the proposed invention the paid call passes over the network, and the unpaid call is disconnected. At the same time an information call is sent to the called subscriber as a signal to feedback.

In the proposed method are eliminated the random connections of the calling and called subscribers for unpaid calls, as such a call from the operator enters the forwarding and controlling server. Introduced into the architecture of the telecommunications network the new node - server - monitors and routes both incoming and outgoing calls.

Over the network from the forwarding and control server through one operator to another is directed the call formed in the server, transmitting to the called subscriber an outgoing call as an information one, containing the data of the calling subscriber namely the complete phone number of the calling subscriber at the same time the calling subscriber is disconnected.

As a result, the information call incoming to the called subscriber cannot connect him with the calling subscriber, and, therefore, are excluded the conversations that must be paid by the insolvent network user. The called subscriber, receiving the information about calling him person calls back, thus taking on the burden of payment.

The implementation of this method will allow not only reliably connect subscribers in a created irregular situation, but also establish a connection using the familiar operation of dialing the desired number.

Thus, the proposed method for performing information telephone calls is reliable and convenient in operation, which ultimately improves the quality of mobile communication services.

Summary of the invention is explained in the following description and drawings.

The claimed method is implemented as follows.

Each network subscriber is provided with an opportunity to get network access for outgoing calls, regardless of the status of his account and accept the call and/or receive the calling subscriber's messages without the prepaid credit account. The calling subscriber dials the phone number of the called subscriber; the operator of the calling subscriber determines his solvency; upon initiation of a call by the calling subscriber who does not have a valid credit account, for its transmission to the called subscriber the outgoing call is directed through the operator serving the calling subscriber to a forwarding and controlling server and at its command disconnects the calling subscriber; the forwarding and controlling server processes the information and forms a call; by this call through the operator serving the calling subscriber is transferred an outgoing call to the network operator serving the called subscriber as an information call notifying of the missed call; for the calling subscriber is created a notification of the missed call, providing information comprising the complete phone number of the calling subscriber; the information call is disconnected instantly by command of the forwarding and controlling server when the operator serving the called subscriber confirms receipt of information about calling subscriber.

Upon disconnection the operator servicing the calling subscriber sends him a notification of the absence of the valid credit account.

The above steps of the method are carried out by means of a hardware support.

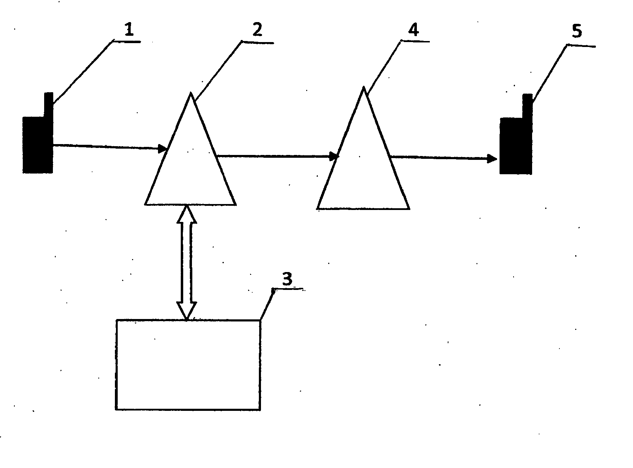

The drawing schematically illustrates the telephone network, through which the proposed method is carried out.

The mobile phone of the calling subscriber 1 (A) maintains contact with the switch 2 of the operator serving the given subscriber. The switch 2 is made with the possibility to redirect a call coming from the subscriber A. The switch 2 is connected to a service forwarding and controlling server 3, made with the possibility of receiving the outgoing call of the subscriber A, processing the received information and forming the call signal. The switch 2 is also connected to the switch 4 of the operator serving the called subscriber 5 (B), having a mobile phone. The switch 4 is made with the possibility of receiving and transferring calls to the mobile phone 5.

In the process of implementation of this method for performing information telephone calls subscriber A, the credit account of which is not valid and outgoing calls are restricted, from his mobile phone makes a call, entering the switch 2. The switch 2 receives the call of subscriber A and verifies his solvency. In the case of establishing the fact of insolvency of the subscriber A the switch 2 redirects the outgoing call to the forwarding and controlling server 3. The server 3 processes the received information, generates a command for the switch 2 to disconnect the mobile phone 1 and forms a call, which it sends to the switch 2. The switch 2 determines the received signal as a call, serving as an information call, and transfers it to the switch 4 in the network of the called subscriber B. The server 3 controls the passage of the information call and disconnects it by command instantly when the operator (4) serving the called subscriber (5) confirms receipt of information about calling subscriber (1). At the same time the called subscriber B receives a message about the missed call, comprising the complete phone number of the calling subscriber A.

The communication between the switch 2 and the server 3 can be arranged both through a protocol such as IN (Intelligent Network) and a protocol ISUP (Integrated Services User Part).

The described method, implemented by the scheme shown in the drawing, refers to a situation when subscriber A and subscriber B are served by different operators.

In the case where subscribers A and B are served by one operator, the call goes directly to the subscriber B.

In the process of implementation of the method are used conventional for mobile communication, widely described in the special literature and well known to those skilled in the art hardware and software tools.

### Exemplary embodiment

The proposed method has been used in the process of experimental communication between two subscribers A and B, the first of which had no money on the credit account. Both subscribers were the owners of mobile phones Nokia X3.

In the formation of a telecommunication network, implementing this method, as a switch serving the subscriber A and a switch serving the subscriber B, has been used a switch of the type MSC (Mobile Service Switching Center) with a node GMSSC (Gateway Mobile Service Switching Center) included therein, executed on the module Ericsson AXE10. At the same time GMSSC is the gateway mobile service switching center and configures the routing of telephone connections.

As a forwarding and control server was used the Beep SCS server (Service Controlling Server) graded Giness BSCS v1.4.

Initiated by the subscriber A the call of subscriber B enters the MSC, which checks the type of subscriber and requests through the protocol INAP (Intelligent Network Application Protocol) in the IN SCP (Service Control Point) an authorization for the service. In the absence of the valid credit account of the subscriber A SCP rejects the call, sending the corresponding disconnection code. By using the MSC/SSF service switching function, MSC redirects the call - initial address message (ISUP_IAM) - through GMSSC in Beep SCS (Service Controlling Server).

In this server from the message is extracted the phone numbers of the calling and called subscribers, and the call is disconnected, using a pre-configured code. Call processing is complete and the GMSSC at the Beep SCS command disconnects the call received from the MSC/SSF, and the MSC/SSF, in turn, in accordance with the service switching function disconnects the calling subscriber A.

Then Beep SCS forms a call in accordance with the initial address message, using the numbers of previously registered calling and called subscribers. Thus, in the network is created an outgoing call, formed in Beep SCS (service forwarding and controlling server) and performing the function of information call. Beep SCS sends this call through the GMSC of MSC switch, serving the calling subscriber A, by appointment, in accordance with the phone number of subscriber B, to the MSC switch, serving the called subscriber B.

In turn, this switch through the GMSC sends to Beep SCS (ISUP_ACM) or (ISUP_CPG) a message on the receipt by subscriber B telephone of the complete number of subscriber A. In response to the received message Beep SCS instantly disconnects the information call, so that the called subscriber receives only a short call and an information missed call message on the mobile phone screen.

As seen from the process for performing in a mobile network an information telephone call minutely described in the exemplary embodiment, in the forwarding and controlling server the outgoing call ends and the information call is formed.

The direct communication between the subscriber A and subscriber B is absent and consequently excluded even the casual possibility of conversation at the expense of the insolvent calling subscriber, which confirms the solution in the invention of the undertaken task.

## Claims

1. Method for performing information telephone calls, performed in a mobile communication network, in which each subscriber (A, B) of the network is provided with an opportunity to get network access for outgoing calls regardless of the status of his/her account, and to accept a call and/or to receive a calling subscriber's (A) message without pre-paid credit account,
wherein when the calling subscriber (A) dials the phone number of a called subscriber (B), the operator (2) of the calling subscriber (A) determines the solvency of the calling subscriber (A),
**characterized in that**
upon initiation of a call by the calling subscriber (A), who does not have a valid credit account, for its transmission to the called subscriber (B) the outgoing call is directed through the operator (2) of the calling subscriber (A) to a forwarding and controlling server (3) and at the command of the forwarding and controlling server (3) the operator (2) of the calling subscriber (A) disconnects the calling subscriber (A),
the forwarding and controlling server (3) processes the obtained information and forms an information call to the operator's (4) network serving the called subscriber (B), said information call comprising the complete phone number of the calling subscriber (A) and notifying of the call by the calling subscriber (A), and
the information call is disconnected instantly by command of the forwarding and controlling server (3) when the operator (4) serving the called subscriber (B) confirms receipt of the information call by the called subscriber (B).

2. Method as set forth in claim 1, wherein upon disconnection the operator (2) servicing the calling subscriber (A) sends a notification of the absence of the valid credit account to the calling subscriber (A).

3. Method as set forth in claim 1 or 2, wherein the information call is transferred by the operator (2) of the calling subscriber (A) to the operator (4) of the called subscriber (B).

4. Method as set forth in claim 1 or 2, wherein, when the calling subscriber (A) and the called subscriber (B) are served by the same operator (2), the information call is transferred by the operator (2) of the calling subscriber (A) to the called subscriber (B).

## Patentansprüche

1. Verfahren zum Durchführen von Informations-Telefonanrufen in einem mobilen Kommunikationsnetzwerk, in dem jeder Teilnehmer (A, B) des Netzwerks die Möglichkeit erhält, unabhängig vom Status seines/ihres Kontos für ausgehende Anrufe auf das Netzwerk zuzugreifen, und einen Anruf anzunehmen und/oder eine Nachricht eines anrufenden Teilnehmers (A) ohne Prepaid-Guthabenkonto zu empfangen,
wobei, wenn der anrufende Teilnehmer (A) die Telefonnummer eines angerufenen Teilnehmers (B) wählt, der Betreiber (2) des anrufenden Teilnehmers (A) die Zahlungsfähigkeit des anrufenden Teilnehmers (A) ermittelt,
**dadurch gekennzeichnet, dass**
bei Initiierung eines Anrufes durch den anrufenden Teilnehmer (A), der kein gültiges Guthabenkonto besitzt, für dessen Übermittlung zu dem angerufenen Teilnehmer (B) der ausgehende Anruf durch den Betreiber (2) des anrufenden Teilnehmers (A) zu einem Weiterleitungs- und Steuerungs-Server (3) geleitet wird und auf den Befehl des Weiterleitungs- und Steuerungs-Servers (3) hin der Betreiber (2) des anrufenden Teilnehmers (A) den anrufenden Teilnehmer (A) unterbricht,
der Weiterleitungs- und Steuerungs-Server (3) die erhaltene Information verarbeitet und einen Informationsanruf an den Netzwerk-Dienstbetreiber (4) des angerufenen Teilnehmers (B) tätigt, wobei dieser Informationsanruf die vollständige Telefonnummer des anrufenden Teilnehmers (A) aufweist und über den Anruf des anrufenden Teilnehmers (A) informiert, und
der Informationsanruf auf Befehl des Weiterleitungs- und Steuerungs-Servers (3) sofort unterbrochen wird, wenn der Betreiber (4) des angerufenen Teilnehmers (B) den Empfang des Informationsanrufs durch den angerufenen Teilnehmer (B) bestätigt.

2. Verfahren nach Anspruch 1, wobei auf die Unterbrechung hin der Betreiber (2) des anrufenden Teilnehmers (A) eine Mitteilung über die Abwesenheit eines gültigen Guthabenkontos an den anrufenden Teilnehmer (A) sendet.

3. Verfahren nach Anspruch 1 oder 2, wobei der Informationsanruf von dem Betreiber (2) des anrufenden Teilenehmers (A) an den Betreiber (4) des angerufenen Teilnehmers (B) übermittelt wird.

4. Verfahren nach Anspruch 1 oder 2, wobei, wenn der anrufende Teilnehmer (A) und der angerufene Teilnehmer (B) durch denselben Betreiber (2) versorgt werden, der Informationsanruf von dem Betreiber (2) des anrufenden Teilenehmers (A) an den angerufenen Teilnehmer (B) übermittelt wird.

## Revendications

1. Procédé pour réaliser des appels téléphoniques d'information réalisés dans un réseau de communication mobile dans lequel chaque abonné (A, B) du réseau a une occasion d'avoir accès au réseau pour des appels sortants indépendamment de l'état de son compte et d'accepter un appel et/ou de recevoir un message d'un abonné appelant (A) sans compte de crédit prépayé, cependant que, lorsque l'abonné appelant (A) compose le numéro de téléphone d'un abonné appelé (B), l'opérateur (2) de l'abonné appelant (A) détermine la solvabilité de l'abonné appelant (A),
**caractérisé en ce qu**'après lancement d'un appel par l'abonné appelant (A) qui n'a pas de compte de crédit valide, pour sa transmission à l'abonné appelé (B), l'appel sortant est dirigé par l'opérateur (2) de l'abonné appelant (A) vers un serveur de renvoi et de contrôle (3) et, sur la commande du serveur de renvoi et de contrôle (3), l'opérateur (2) de l'abonné appelant (A) déconnecte l'abonné appelant (A),
le serveur de renvoi et de contrôle (3) traite l'information obtenue et forme un appel d'information au réseau de l'opérateur (4) qui sert l'abonné appelé (B), ledit appel d'information comprenant le numéro de téléphone complet de l'abonné appelant (A) et notifiant de l'appel par l'abonné appelant (A) et
l'appel d'information est déconnecté instantanément par la commande du serveur de renvoi et de contrôle (3) lorsque l'opérateur (4) qui sert l'abonné appelé (B) confirme la réception de l'appel d'information par l'abonné appelé (B).

2. Procédé selon la revendication 1 dans lequel, après déconnexion, l'opérateur (2) qui sert l'abonné appelant (A) envoie une notification de l'absence du compte de crédit valide à l'abonné appelant (A).

3. Procédé selon la revendication 1 dans lequel l'appel d'information est transféré par l'opérateur (2) de l'abonné appelant (A) à l'opérateur (4) de l'abonné appelé (B).

4. Procédé selon la revendication 1 ou 2 dans lequel, lorsque l'abonné appelant (A) et l'abonné appelé (B) sont servis par le même opérateur (2), l'appel d'information est transféré par l'opérateur (2) de l'abonné appelant (A) à l'abonné appelé (B).
